# EUROPÄISCHE PATENTSCHRIFT

(11) **EP 4 560 298 B1**
(45) Veröffentlichungstag und Bekanntmachung des Hinweises auf die Patenterteilung: **23.09.2026**
(21) Anmeldenummer: 24211794.3
(22) Anmeldetag: 08.11.2024
(51) Int. Cl.: G01N 22/02, B65G 43/02

(54) **RIEMENTRIEB, VORZUGSWEISE TRANSPORTBANDANLAGE**
BELT DRIVE, PREFERABLY CONVEYOR BELT SYSTEM
ENTRAÎNEMENT À COURROIE, DE PRÉFÉRENCE INSTALLATION DE BANDE TRANSPORTEUSE

(30) Priorität: 27.11.2023 DE 102023211820
(43) Veröffentlichungstag der Anmeldung: 28.05.2025
(73) Patentinhaber: ContiTech Deutschland GmbH, 30175 Hannover (DE)
(72) Erfinder: Reck, Siegfried, 30175 Hannover (DE)
(74) Vertreter: Preusser, Andrea

(56) Entgegenhaltungen:
- DE-A1- 102007 024 853
- DE-A1- 19 643 997
- US-A1- 2022 009 721

## Beschreibung

Die vorliegende Erfindung betrifft einen Riementrieb und vorzugsweise eine Transportbandanlage.

Zum Transport von insbesondere losem Fördergut wie zum Beispiel Schüttgut wie zum Beispiel in Form von Steinen, Erz, Kohle, Getreide, Granulat und dergleichen im Bergbau, in der Industrie und auf den Transportwegen werden häufig Förderbänder eingesetzt, welche auch als Transportbänder bezeichnet werden können. Derartige Förderbänder werden endlos geschlossen in einer Förderbandanlage bzw. in einer Transportbandanlage verwendet. Die Förderbänder bestehen üblicherweise zumindest im Wesentlichen aus einem flexiblen Material wie zum Beispiel aus einem elastomeren Material wie zum Beispiel aus vulkanisiertem Kautschuk, auch Gummi genannt, in welches in der Zugrichtung, Transportrichtung bzw. Bewegungsrichtung verlaufend Zugträger bzw. Festigkeitsträger zur Übertragung der Zugkräfte eingebettet sind. Derartige Zugträger können bei Förderbändern Stahlseile sein, welche vergleichsweise große bzw. schwere Lasten zu fördern haben, insbesondere Stahlseile sein.

Ebenso sind Förderbänder bekannt, welche für kleinere Anwendungen geeignet sind und textile Flächengebilde als Zugträger aufweisen. Derartige Anwendungen können ebenfalls lose Fördergüter fördern.

In jedem Fall erstrecken sich derartige Förderanlagen, welche auch als Förderer bezeichnet werden können, üblicherweise zumindest im Wesentlichen in der horizontalen Ebene, sodass die einzelnen Komponenten bzw. Anlagenteile der Förderanlage auf einem Untergrund angeordnet sind. Zu den Komponenten einer Förderanlage, welche auch als Anlagenteile bezeichnet werden können, gehört üblicherweise wenigstens eine Antriebstrommel, welche mittels eines Antriebs rotatorisch betrieben werden kann, und am gegenüberliegenden Ende der Förderanlage wenigstens eine Umlenkrolle. Das Förderband wird endlos geschlossen und gespannt um die Antriebstrommel und um die Umlenkrolle gelegt, sodass der obere Bereich des Förderbandes, welcher auch als Obertrum bezeichnet werden kann, mittels des Antriebs der Antriebstrommel in die eine Richtung und der untere Bereich des Förderbandes, welcher auch als Untertrum bezeichnet werden kann, in die entgegengesetzte Richtung bewegt werden kann.

Zwischen der Antriebstrommel und der Umlenkrolle werden üblicherweise zahlreiche Laufrollen angeordnet, welche das Obertrum bzw. das Untertrum des Förderbandes in der vertikalen Richtung von unten abstützen. Derartige Laufrollen können auch als Tragrollen bezeichnet werden. Üblicherweise werden beim Obertrum des Förderbandes in der Querrichtung mehrere und insbesondere drei Laufrollen nebeneinander angeordnet und dabei die äußeren Laufrollen zur horizontalen Ebene schräg gestellt. Hierdurch ergibt sich eine gemuldete Form des Obertrums des Förderbandes, sodass das lose Schüttgut in der Querrichtung seitlich in einem gewissen Maße auf der Oberfläche der Oberseite des Förderbandes gehalten werden kann.

Da derartige Fördergüter häufig spitz und scharfkantig ausgebildet sind, können diese Fördergüter beim Transport und insbesondere durch ihr Aufschlagen auf der Oberfläche der Oberseite des Förderbandes an dessen Aufgabestelle dort zu Beschädigungen des flexiblen Materials des Förderbandes führen. Hierdurch kann das elastomere Material des Förderbandes punktuell abgetragen und hierdurch geschwächt werden. Es kann sogar zu Durchbrüchen bis zur Unterseite des Förderbandes kommen. Zunehmende Beschädigungen können dabei bis zu den Zugträgern reichen und auch diese beschädigen. Durch derartige Beschädigungen können auch die Zugträger in der Längsrichtung durchtrennt werden. Auch können die Zugträger als Stahlseile durch Korrosion beschädigt werden, wenn das flexible Material die Zugträger nicht mehr vor äußeren Einflüssen wie zum Beispiel Witterungseinflüssen wie zum Beispiel vor Feuchtigkeit schützen kann. Vergleichbares gilt für textile Zugträger.

Transportbänder und andere Riemenantriebe sind somit harten Betriebsbedingungen ausgesetzt, die sie ermüden und schädigen.

Derartige Beschädigungen können zum Beispiel durch ein Zerreißen des Förderbands in der Querrichtung und bzw. oder durch sich in der Längsrichtung erstreckende Schlitze durch das flexible Material des Förderbandes hindurch zu einem Ausfall der Förderanlage führen. Dies kann zu einem Verlust des Fördergutes, welches sich zu diesem Zeitpunkt auf dem Obertrum des Förderbandes befindet, sowie zu entsprechenden Umweltschäden führen. Auch können die Anschaffung und Montage eines neuen Förderbandes Aufwand und Kosten verursachen. Insbesondere können aber durch den Stillstand der Förderanlage und gegebenenfalls durch den hierdurch verursachten Stillstand zum Beispiel der gesamten Mine, der gesamten Produktionsanlage, des gesamten Hafenterminals, des gesamten Güterbahnhofs und dergleichen sehr hohe Kosten durch den Ausfall der entsprechenden Produktions- bzw. Transportkapazitäten entstehen. Zu beachten ist ferner, dass derartige Förderbänder üblicherweise über einen längeren Zeitraum segmentweise hergestellt, an den Einsatzort transportiert und dort endlos geschlossen werden müssen, was einen entsprechenden zeitlichen Vorlauf bzw. Zeitbedarf erfordert.

Zur Überwachung derartige Förderbänder auf Beschädigungen und insbesondere auf Längsschlitze ist es daher bekannt, Verfahren und Vorrichtungen zur Überwachung zu verwenden, welche selbsttätig und möglichst frühzeitig eine derartige Beschädigung und insbesondere einen Längsschlitz erkennen und zum Beispiel durch ein Anhalten des Förderbandes hierauf reagieren können, um weitere Beschädigungen bzw. eine Vergrößerung der Beschädigung zu vermeiden.

Hierzu können Leiterschleifen, Transponder und dergleichen in die Deckplatte des Förderbandes eingebettet und von außerhalb des Förderbandes seitens der Förderbandanlage detektiert werden. Aus der Abwesenheit einer erwarteten Leiterschleife kann dann auf eine Beschädigung an dieser Stelle geschlossen werden. Derartige Vorrichtungen und Verfahren sind beispielsweise aus der DE 196 43 997 A1, aus der DE 197 21 916 A1, aus der DE 199 02 508 A1 , aus der US2022009721A1 oder aus der EP 0 753 472 A1 bekannt.

Nachteilig an der Verwendung von Leiterschleifen, Transponder und dergleichen wie zuvor beschrieben ist, dass diese Bauteile in die Deckschicht bzw. in die Deckplatte des Förderbandes eingebettet und dort vulkanisiert werden müssen. Aufgrund der Größe dieser Bauteile ist hierzu üblicherweise eine minimale Dicke von ca. 5 mm bis ca. 6 mm der Deckplatte erforderlich, um die Bauteile dort vollständig einbetten zu können. Somit können derartige Vorrichtungen und Verfahren nicht bei Förderbändern angewendet werden, welche vergleichsweise dünne Deckplatten besitzen. Derartige Förderbänder können somit auf diese Art und Weise nicht auf Beschädigungen und insbesondere auf Längsschlitze wie zuvor beschrieben überwacht werden.

Ein weiterer Nachteil bei der Verwendung von Leiterschleifen allgemein ist, dass diese je nach Betriebsbedingungen nur eine begrenzte Lebensdauer haben, so dass nach einer gewissen Zeit die Leiterschleifen ausgetauscht werden müssen oder nicht mehr zur Überwachung verwendet werden können, d.h. auch ohne Beschädigungen nicht mehr detektiert werden können.

Es ist auch bekannt, den Leistungsbedarf der Antriebstrommel einer Förderbandanlage zu betrachten, um aus dessen aktuellen Wert auf eine Störung der Förderbandanlage bzw. auf einen Riss des Förderbands zu schließen.

Die DE 31 11 219 A1 beschreibt eine Einrichtung zur Sicherung des oder der Fördergurte einer Bandförderanlage gegen Längsschlitzung durch verklemmte Gegenstände. Für jede Auf- und/oder Übergabestelle für das Fördergut ist mindestens ein Überwachungsorgan vorgesehen, das charakteristische Werte für die Bewegung des Fördergurtes, insbesondere für die Fördergeschwindigkeit, oder für die Belastung des Antriebes, insbesondere für den Motorstrom des oder der Antriebsmotoren, überträgt, das den augenblicklichen charakteristischen Wert mit den vorher aufgenommenen charakteristischen Werten vergleicht und bei einer eine vorgegebene Abweichung übersteigenden Abweichung einen Abschaltbefehl an den oder die Antriebsmotoren gibt.

Die EP 4 019 435 A1 beschreibt ein Verfahren zum Betrieb einer Förderbandanlage mit einem Förderband, welches ein elastomeres Material aufweist, in welches wenigstens in einer Förderrichtung verlaufende Zugträger eingebettet sind, und mit wenigstens einer Antriebstrommel, welche ausgebildet ist, das Förderband in der Förderrichtung anzutreiben, mit wenigstens den Schritten:
- Erfassen eines Leistungsbedarfs der Antriebstrommel,
- Vergleichen des aktuellen Leistungsbedarfs der Antriebstrommel mit einem vorbestimmten Leistungsbedarf und
- bei Überschreiten eines vorbestimmten Schwellwerts, Anhalten der Antriebstrommel.

Ferner ist bekannt, die Änderung des Leistungsbedarfs der Antriebstrommel einer Förderbandanlage zu betrachten, um aus dem Maß der Veränderung im Allgemeinen auf eine Störung der Förderbandanlage bzw. auf einen Riss des Förderbands zu schließen.

Die EP 4 019 436 A1 beschreibt ein Verfahren zum Betrieb einer Förderbandanlage mit einem Förderband, welches ein elastomeres Material aufweist, in welches wenigstens in einer Förderrichtung verlaufende Zugträger eingebettet sind, und mit wenigstens einer Antriebstrommel, welche ausgebildet ist, das Förderband in der Förderrichtung anzutreiben, mit wenigstens den Schritten:
- Erfassen eines Leistungsbedarfs der Antriebstrommel,
- Ermitteln einer Änderung des aktuellen Leistungsbedarfs der Antriebstrommel über eine vorbestimmte unmittelbar zurückliegende Zeitdauer,
- Vergleichen der ermittelten Änderung des aktuellen Leistungsbedarfs der Antriebstrommel mit einer vorbestimmten Änderung und
- bei Überschreiten eines vorbestimmten Schwellwerts, Anhalten der Antriebstrommel.

Die US 2022/009721 A1 beschreibt ein Netzwerk von Sensoren, welches das zu überwachende Transportband von beiden Seiten mit Mikrowellen bestrahlt und deren Reflexions-/Transmissionsverhalten misst. Dabei sind die Messergebnisse von den dielektrischen Eigenschaften der Materialien im Strahlengang abhängig. Die Auswertung der Messdaten ermöglicht Aussagen über Schäden an der Oberfläche des Transportbandes und über Veränderungen in dessen innerer Tragstruktur.

Nachteilig ist hierbei, dass sich die senkrecht zur Bewegungsrichtung des Transportbands angeordneten Sensoren bzw. Antennenpaare gegenseitig beeinflussen. Somit ist die Anzahl parallel arbeitender Systeme begrenzt, wodurch auch die Anwendung auf entsprechend schmale Transportbänder begrenzt wird.

Werden diese mehreren Sensoren dennoch in größerer Anzahl nebeneinander eingesetzt, so käme es bei gleichzeitigem Betrieb der räumlich benachbarten Systeme zu einem gegenseitigen Übersprechen, was die Qualität der Messergebnisse herabsetzt. Aufgrund von Frequenzschwankungen der Sender der Antennenpaare entsteht nämlich ein Phasenrauschen.

Außerdem überlagert sich das Phasenrauschen der einzelnen HF-Generatoren zu einem Rauschpegel, der schwache Signale (aus dem Inneren des Riemens) überdeckt.

Um dies zu vermeiden, können die einzelnen Sender-Empfänger-Paare nacheinander, d.h. nicht gleichzeitig, betrieben werden. Dies führt jedoch zu einer lückenhaften Erfassung des Transportbands.

Eine Aufgabe der vorliegenden Erfindung ist es, die Möglichkeiten der Überwachung von Riemen, insbesondere von Transportbändern, zu verbessern. Insbesondere sollen die Möglichkeiten der Überwachung von Riemen, insbesondere von Transportbändern, mittels des Ansatzes der US 2022/009721 A1 verbessert werden. Insbesondere soll diesbezüglich die vollflächige bzw. durchgehende Überwachung eines Riemens, insbesondere eines Transportbands, ermöglicht werden. Zumindest soll eine Alternative zu den bekannten Möglichkeiten geschaffen werden.

Die Aufgabe wird erfindungsgemäß durch einen Riementrieb, vorzugsweise durch eine Transportbandanlage, mit den Merkmalen gemäß Patentanspruch 1 gelöst. Vorteilhafte Weiterbildungen sind in den Unteransprüchen beschrieben.

Somit betrifft die vorliegende Erfindung einen Riementrieb, vorzugsweise eine Transportbandanlage, mit einem Riemen, welcher um eine antreibende Riemenscheibe und um eine angetriebene Riemenscheibe herum endlos geschlossen ist, mit einer Mehrzahl paralleler Sende-Antennen, welche jeweils ausgebildet und angeordnet sind, eine elektromagnetische Welle winkelig zum Riemen hin auszusenden, mit einer Empfangs-Antenne pro Sende-Antenne, welche ausgebildet und angeordnet ist, die jeweils reflektierte Welle zu erfassen, und mit einer Steuerungs- und Auswerte-Einheit, welche ausgebildet und eingerichtet ist, aus der jeweils ausgesendeten elektromagnetischen Welle und der jeweils entsprechenden erfassten reflektierten Welle das Reflexions-/Transmissionsverhalten des Riemens an dieser Stelle zu bestimmen.

Der Riementrieb ist dadurch gekennzeichnet, dass die Sende-Antennen ausgebildet sind, ihre elektromagnetischen Wellen mit der gleichen Frequenz und phasensynchron zueinander auszusenden.

Hierdurch können Frequenzschwankungen zwischen den einzelnen Sende-Antennen, welche zu einem störenden Phasenrauschen wie eingangs beschrieben führen können, vermieden werden. Dies kann den störungsfreien bzw. ausreichend störungsarmen Betrieb aller Sende-Antennen gleichzeitig ermöglichen. Hierdurch kann eine vollflächige bzw. durchgehende Überwachung eines Riemens ermöglicht werden.

Gemäß einem Aspekt der Erfindung werden die Sende-Antennen von einer multiplen Sende-Antenne gebildet. Somit kann eine multiple Sende-Antenne als Sende-Antenne mit mehreren einzelnen Sende-Antennen-Elementen dazu verwendet werden, aus einem gemeinsamen Ausgangssignal, welches zeitgleich allen Sende-Antennen-Elementen zugeführt wird, ein gleichzeitiges Aussenden mit gleicher Frequenz und phasensynchron des Ausgangssignals durch alle Sende-Antennen-Elemente zu ermöglichen. Dies kann eine Möglichkeit der Umsetzung darstellen.

Gemäß einem weiteren Aspekt der Erfindung weist der Riementrieb einen Leistungsversteiler auf, welcher ausgebildet ist, ein Ausgangssignal zu erhalten und das erhaltene Ausgangssignal an die Sende-Antennen mit dergleichen Frequenz und phasensynchron weiterzuleiten. Dies kann eine konkrete Möglichkeit der Umsetzung darstellen.

Gemäß einem weiteren Aspekt der Erfindung weist der Leistungsversteiler einen Wilkinson-Teiler auf. Hierunter wird ein Bauelement der Hochfrequenztechnik verstanden, welches als Leistungsteiler dient. Ein Leistungsteiler dient dazu, eine als geführte Welle beschriebene elektromagnetische Leistung abzuzweigen bzw. in eine Leiterstruktur aus- oder einzukoppeln. Dies kann eine konkrete Möglichkeit der Umsetzung darstellen.

Gemäß einem weiteren Aspekt der Erfindung ist die Steuerungs- und Auswerte-Einheit ausgebildet und eingerichtet, einen Signalgenerator anzusteuern und ein Sendesignal mit einer Grundfrequenz zu erzeugen, wobei ein Frequenzvervielfacher eingerichtet und ausgebildet ist, aus dem Sendesignal das Ausgangssignal als Mikrowellensignal zu erzeugen und den Sende-Antennen, vorzugsweise der multiplen Sende-Antenne, zuzuführen. Sehr hohen Frequenzen lassen sich technisch einfacher und kostengünstiger erzeugen, wenn der Frequenzvervielfacher eine hochgenaue Basisfrequenz auf die gewünschte Zielfrequenz anhebt.

Gemäß einem weiteren Aspekt der Erfindung ist ein HF-Verstärker ausgebildet und eingerichtet, das Ausgangssignal des Frequenzvervielfachers zu erhalten, zu verstärken und den Sende-Antennen, vorzugsweise der multiplen Sende-Antenne, zuzuführen. Mit Hilfe des Hochfrequenzverstärkers kann das Ausgangssignal in seiner Leistung an die Erfordernisse angepasst werden.

Gemäß einem weiteren Aspekt der Erfindung ist jeweils ein Eingangsverstärker pro Empfangs-Antenne ausgebildet und eingerichtet, die jeweilige reflektierte elektromagnetische Welle von der jeweiligen Empfangs-Antenne zu erhalten, zu verstärken und der Steuerungs- und Auswerte-Einheit zuzuführen. Mit dem Eingangsverstärker kann die Amplitude des empfangenen Signals so weit angehoben werden, wie es die nachgelagerte Verarbeitung erfordert.

Gemäß einem weiteren Aspekt der Erfindung ist jeweils ein Mischer pro Empfangs-Antenne ausgebildet und eingerichtet, das Ausgangssignal der Sende-Antennen und die reflektierte elektromagnetische Welle der jeweiligen Empfangs-Antenne zu erhalten, wobei der Mischer ferner ausgebildet und eingerichtet ist, das Eingangssignal der jeweiligen reflektierten elektromagnetische Welle mit dem Ausgangssignal der Sende-Antennen zu multiplizieren. Durch die Multiplikation des Empfangssignal mit dem originären Sendesignal können Signale mit der Summen- und der Differenzfrequenz der beiden Eingangssignale entstehen bzw. erzeugt werden. Letztere können so niederfrequent sein, dass eine einfache Elektronik ausreicht, sie zu verarbeiten.

Gemäß einem weiteren Aspekt der Erfindung ist jeweils ein Tiefpassfilter ausgebildet und eingerichtet, das Ausgangssignal des jeweiligen Mischers Tiefpass zu filtern. Der Tiefpassfilter lässt nur die relevanten (niederfrequenten) Anteile des gemischten Signals passieren. Dadurch lassen sich ungewollte weitere Mischvorgänge an nachfolgenden Stufen mit nichtlinearer Charakteristik vermeiden.

Gemäß einem weiteren Aspekt der Erfindung ist jeweils ein Niederfrequenzverstärker ausgebildet und eingerichtet, das Ausgangssignal des jeweiligen Tiefpassfilters niederfrequent zu verstärken. Dies kann eine konkrete Möglichkeit der Umsetzung darstellen. Hierdurch kann eine entsprechende Signalverstärkung erfolgen.

Ein Ausführungsbeispiel und weitere Vorteile der Erfindung werden nachstehend im Zusammenhang mit den folgenden Figuren erläutert. Darin zeigt:
- Fig. 1: einen schematischen Aufbau eines Riementriebs;
- Fig. 2: eine schematische Darstellung einer Auswerteelektronik;
- Fig. 3: einen bekannten Riementrieb mit einer Mehrzahl einzelner Sende-Antenne;
- Fig. 4: einen erfindungsgemäßen Riementrieb mit einer multiplen Sende-Antenne mit einer Mehrzahl von Sende-Antennen;
- Fig. 5: eine schematische Darstellung einer Auswerteelektronik des erfindungsgemäßen Riementriebs; und
- Fig. 6: eine schematische Darstellung eines Leistungsverteilers der Auswerteelektronik des erfindungsgemäßen Riementriebs.

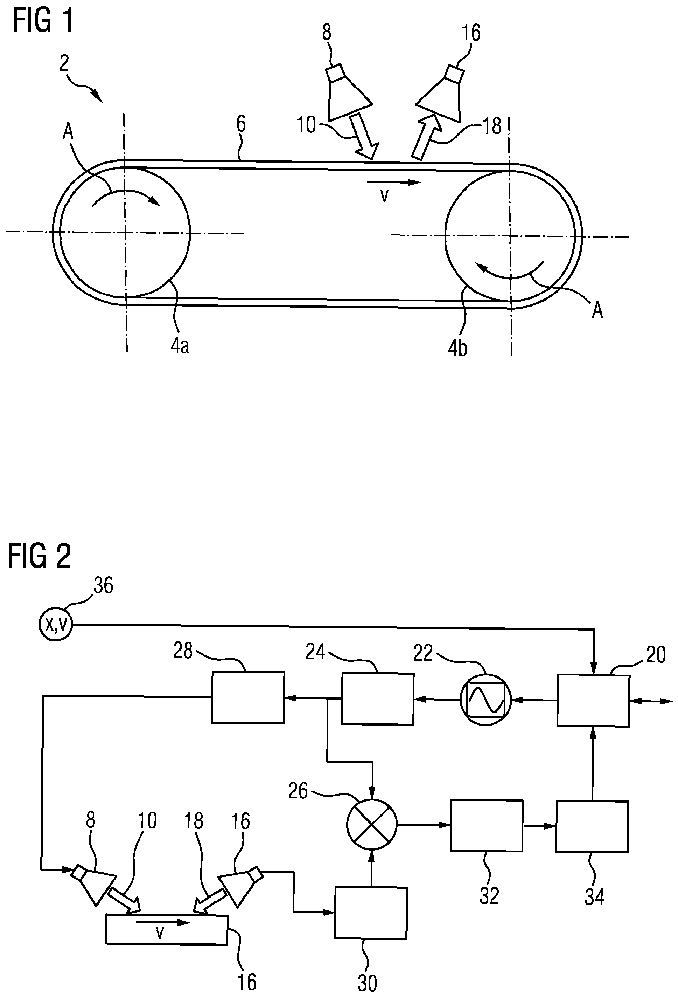

Die Figur 1 zeigt den schematischen Aufbau eines Riementriebs 2, bestehend aus einer antreibenden Riemenscheibe 4a, einem Riemen 6 und einer angetriebenen Riemenscheibe 4b. Mittels der angetriebenen Riemenscheibe 4b wird der Riemen 6 in einer Bewegungsrichtung A mit einer Geschwindelt v angetrieben bzw. bewegt.

Oberhalb des oberen Abschnitts des Riemens 6, auch Obertrum genannt, ist eine Sende-Antenne 8 angeordnet, welche eine elektromagnetische Welle 10 auf die Oberfläche des Riemens 6 strahlt. In der Bewegungsrichtung A ist hinter der Sende-Antenne 8 eine Empfangs-Antenne 16 angeordnet, welche auf die reflektierte elektromagnetische Welle 18 ausgerichtet ist. Der Einfallswinkel der ausgesendeten bzw. der eingestrahlten Welle 10 entspricht mit Ausfallwinkel der reflektierten elektromagnetischen Welle 18.

Die Figur 2 zeigt eine schematische Darstellung einer Auswerteelektronik, die für ein Paar aus Sende- bzw. Empfangs-Antenne 8, 16 konzipiert ist.

Bei der Überwachung des Riemens 6 stellt eine Steuerungs- und Auswerte-Einheit 20 einen Signalgenerator 22 auf eine Grundfrequenz ein. Aus diesem Signal erzeugt ein Frequenzvervielfacher 24 ein Mikrowellensignal, das in den ersten Eingang eines Demodulators 26 und eines HF-Verstärkers 28 gespeist wird, der es über die Sende-Antenne 8 als elektromagnetische Welle 10 abstrahlt.

Die Empfangs-Antenne 16 nimmt die reflektierte Welle 18 auf und leitet ihr elektrisches Signal an einen Eingangsverstärker 30. Das verstärkte Empfangssignal wird von Mischer 26 mit dem Signal des Frequenzvervielfachers 24 multipliziert.

Das Spektrum des Produktsignals enthält die Summen- und die Differenzfrequenz des Eingangssignals, von denen ein Tiefpassfilter 32 die Signalanteile mit der Differenzfrequenz passieren lässt und an einen Niederfrequenzverstärker 34 leitet. Die nachgeschaltete Mess- und Auswerte-Elektronik 20 digitalisiert das niederfrequente Signal und korreliert es mit dem Signal eines Positions-Sensors 36, der die aktuelle Geschwindigkeit des v Riemens 6 und bzw. oder die Längskoordinate x des Punktes auf dem Riemen 6 liefert, auf den Empfangs-Antenne 16 gerichtet ist. Aus den Eingangsdaten berechnet die Mess- und Auswerte-Elektronik 20 ein Profil der Oberfläche des Riemens 6, wie in der US 2022/009721 A1 beschrieben.

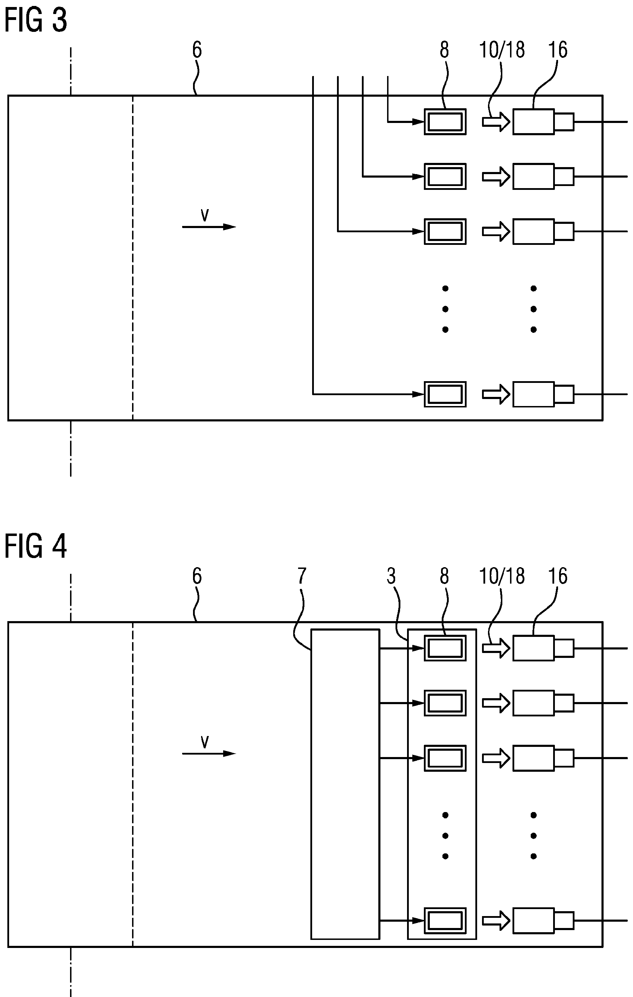

Figur 3 zeigt eine Anordnung mehrerer derartiger Antennen 8, 16 senkrecht zur Bewegungsrichtung A nebeneinander.

Auf diese Art und Weise lassen sich mehrere Systeme gemäß der Figur 2 parallel zueinander betreiben, um entsprechend breite Riemen 6, insbesondere als Transportbänder 6, wie zuvor beschrieben überwachen.

Allerdings ist die Anzahl parallel arbeitender Systeme begrenzt. So kommt es zwischen räumlich benachbarten Systemen zu gegenseitigem Übersprechen, das die Qualität der Messergebnisse herabsetzt. Somit entstehend aus den Frequenzschwankungen der benachbarten Sendeantennen 8 ein Phasenrauschen, welches die reflektierten Wellen 18 untereinander stört.

Außerdem überlagert sich das Phasenrauschen der einzelnen HF-Generatoren zu einem Rauschpegel, der schwache Signale (aus dem Inneren des Riemens) überdeckt.

Daher kann sinnvollerweise das System der Figur 3 hinsichtlich der einzelnen Sender-Empfänger-Paare 8, 16 lediglich nacheinander und nicht gelichzeitig betrieben werden, um dieses Phasenrauschen zu vermeiden.

Figur 4 zeigt die erfindungsgemäße Anordnung bestehend aus einer multiplen Sende-Antenne 3, deren Einzelantennen 8 die elektromagnetische Energie mit derselben Frequenz und phasensynchron abstrahlen, sowie einer Anzahl separater Empfangs-Antennen 16, wie bisher bekannt.

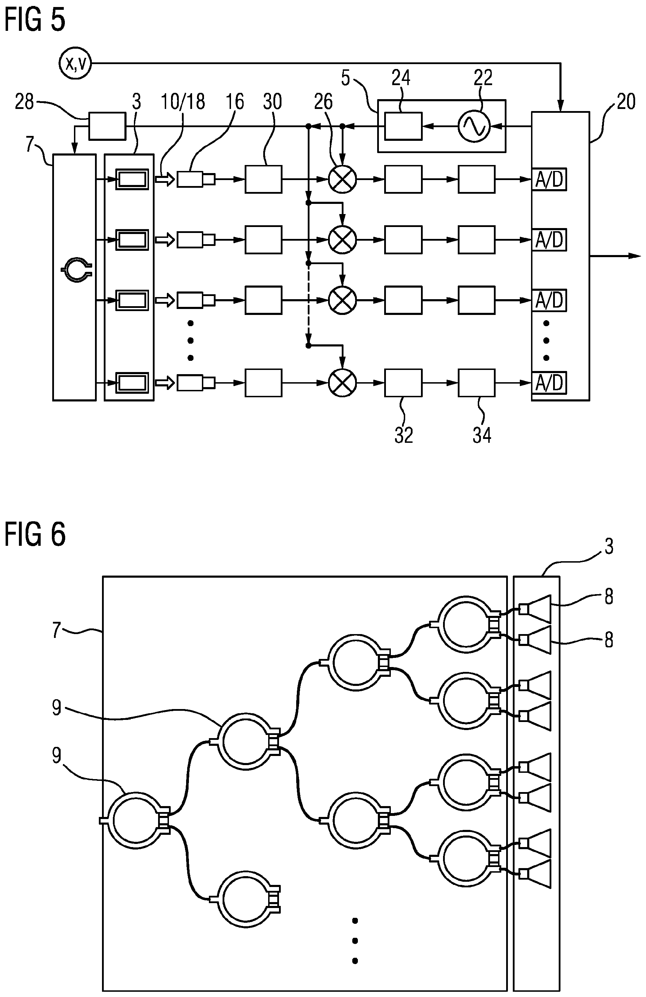

Während die Multi-Antenne 3 von einem zentralen Lokaloszillator 5 (bestehend aus Signalgenerator 22 und HF-Verstärker 24) und einem Leistungsverteiler 7 gespeist wird, verfügen alle Empfangs-Antennen 16 jeweils über einen eigenen Eingangsverstärker 30 und einen eigenen Demodulator 26, die mit dem Signal des Lokaloszillators 5 versorgt werden (s. Figur 5). Die weitere Verarbeitung der Signale erfolgt in parallelen Zweigen aus den Komponenten nach Figur 2.

Somit kann eine multiple Antenne 3 mit phasengleichen Ausgängen verwendet werden, um die Frequenzschwankungen der einzelnen Sendeantennen 8 wie bisher bekannt zueinander zu vermeiden. Dies kann den gleichzeitigen Betrieb aller multiple Antenne 3 sowie deren gleichzeitige Auswertung ermöglichen. Dies führt zu einer vollflächigen bzw. durchgehenden Überwachung des Riemens 6 bzw. des Transportbands 6.

Die Figur 6 zeigt einen Leistungsverteiler 7: Jeweils zwei benachbarte Einzelantennen 8 werden über einen Wilkinson-Teiler 9 angesteuert, der die ihm zugeführt HF-Leistung auf beide Zweige phasengleich aufteilt.

In der nächsten Stufe werden jeweils zwei Wilkinson-Teiler 9 zusammengefasst und ihrerseits durch weitere Wilkinson-Teiler 9 angesteuert. Durch die Verschaltung von jeweils zwei Elementen (Sende-Antenne 8 bzw. Wilkinson-Teiler 9) entsteht eine binäre Verteilerstruktur aus 2 hoch N Stufen. Die Wurzel der Baumstruktur wird dem Lokaloszillator 5 gespeist. Die Verbindungen zwischen den einzelnen Wilkinson-Teilern 9 sind so gestaltet, dass sie die Signale phasentreu an die nachfolgenden Elemente weitergeben.

Die Wilkinson-Teiler 9 sind üblicherweise als Mikrostreifenleitung aufgebaut. Um ungewollte Abstrahlung durch die Verteilerstruktur zu reduzieren und um Bauraum auf der Leiterplatte zu sparen, können sie als Streifenleitungen ausgeführt werden, deren äußere Metallflächen auf dem Massepotential liegen.

### Bezugszeichenliste (Teil der Beschreibung)

- A: Bewegungsrichtung
- v: Geschwindigkeit der Bewegung
- x: Position des Riementriebs 2

- 2: Riementrieb; Transportbandanlage
- 3: multiple Sende-Antenne
- 4a: antreibende Riemenscheibe
- 4b: angetriebene Riemenscheibe
- 5: Lokaloszillator
- 6: Riemen
- 7: Leistungsversteiler
- 8: Sende-Antennen
- 9: Wilkinson-Teiler
- 10: elektromagnetische Welle
- 16: Empfangs-Antennen
- 18: reflektierte elektromagnetische Welle
- 20: Steuerungs- und Auswerte-Einheit
- 22: Signalgenerator
- 24: Frequenzvervielfacher
- 26: Demodulator
- 28: HF-Verstärker
- 30: Eingangsverstärker
- 32: Tiefpassfilter
- 34: Niederfrequenzverstärker

## Patentansprüche

1. Riementrieb (2), vorzugsweise Transportbandanlage (2),
mit einem Riemen (2), welcher um eine antreibende Riemenscheibe (4a) und um eine angetriebene Riemenscheibe (4b) herum endlos geschlossen ist, mit einer Mehrzahl paralleler Sende-Antennen (8), welche jeweils ausgebildet und angeordnet sind, eine elektromagnetische Welle (10) winkelig zum Riemen (2) hin auszusenden,
mit einer Empfangs-Antenne (16) pro Sende-Antenne (8), welche ausgebildet und angeordnet ist, die jeweils reflektierte Welle (18) zu erfassen, und mit einer Steuerungs- und Auswerte-Einheit (20), welche ausgebildet und eingerichtet ist, aus der jeweils ausgesendeten elektromagnetischen Welle (10) und der jeweils entsprechenden erfassten reflektierten Welle (18) das Reflexions-Transmissionsverhalten des Riemens (2) an dieser Stelle zu bestimmen,
**dadurch gekennzeichnet, dass**
die Sende-Antennen (8) ausgebildet sind, ihre elektromagnetischen Wellen (10) mit der gleichen Frequenz und phasensynchron zueinander auszusenden.

2. Riementrieb (2) nach Anspruch 1,
wobei die Sende-Antennen (8) von einer multiplen Sende-Antenne (3) gebildet werden.

3. Riementrieb (2) nach Anspruch 1 oder 2,
ferner mit einem Leistungsversteiler (7), welcher ausgebildet ist, ein Ausgangssignal zu erhalten und das erhaltene Ausgangssignal an die Sende-Antennen (8) mit dergleichen Frequenz und phasensynchron weiterzuleiten.

4. Riementrieb (2) nach Anspruch 3,
wobei der Leistungsversteiler (7) einen Wilkinson-Teiler (9) aufweist.

5. Riementrieb (2) nach einem der vorangehenden Ansprüche,
wobei die Steuerungs- und Auswerte-Einheit (20) ausgebildet und eingerichtet ist, einen Signalgenerator (22) anzusteuern und ein Sendesignal mit einer Grundfrequenz zu erzeugen,
wobei ein Frequenzvervielfacher (24) eingerichtet und ausgebildet ist, aus dem Sendesignal das Ausgangssignal als Mikrowellensignal zu erzeugen und den Sende-Antennen (8), vorzugsweise der multiplen Sende-Antenne (3), zuzuführen.

6. Riementrieb (2) nach Anspruch 5,
wobei ein HF-Verstärker (28) ausgebildet und eingerichtet ist, das Ausgangssignal des Frequenzvervielfachers (24) zu erhalten, zu verstärken und den Sende-Antennen (8), vorzugsweise der multiplen Sende-Antenne (3), zuzuführen.

7. Riementrieb (2) nach einem der vorangehenden Ansprüche,
wobei jeweils ein Eingangsverstärker (30) pro Empfangs-Antenne (16) ausgebildet und eingerichtet ist, die jeweilige reflektierte elektromagnetische Welle (18) von der jeweiligen Empfangs-Antenne (16) zu erhalten, zu verstärken und der Steuerungs- und Auswerte-Einheit (20) zuzuführen.

8. Riementrieb (2) nach einem der vorangehenden Ansprüche,
wobei jeweils ein Mischer (26) pro Empfangs-Antenne (16) ausgebildet und eingerichtet ist, das Ausgangssignal der Sende-Antennen (8) und die reflektierte elektromagnetische Welle (18) der jeweiligen Empfangs-Antenne (16) zu erhalten,
wobei der Mischer (26) ferner ausgebildet und eingerichtet ist, das Eingangssignal der jeweiligen reflektierten elektromagnetische Welle (18) mit dem Ausgangssignal der Sende-Antennen (8) zu multiplizieren.

9. Riementrieb (2) nach Anspruch 8,
wobei jeweils ein Tiefpassfilter (32) ausgebildet und eingerichtet ist, das Ausgangssignal des jeweiligen Mischers (26) Tiefpass zu filtern.

10. Riementrieb (2) nach Anspruch 9,
wobei jeweils ein Niederfrequenzverstärker (34) ausgebildet und eingerichtet ist, das Ausgangssignal des jeweiligen Tiefpassfilters (32) niederfrequent zu verstärken.

## Claims

1. Belt drive (2), preferably conveyor belt installation (2),
with a belt (2), which is endlessly closed around a driving belt pulley (4a) and around a driven belt pulley (4b), with a plurality of parallel transmitting antennas (8), which are each configured and arranged to emit an electromagnetic wave (10) at an angle towards the belt (2),
with one receiving antenna (16) per transmitting antenna (8), which is configured and arranged to detect the respectively reflected wave (18), and
with a control and evaluation unit (20), which is configured and set up to determine, from the respectively emitted electromagnetic wave (10) and the respectively corresponding detected reflected wave (18), the reflection-transmission behaviour of the belt (2) at this point,
**characterised in that**
the transmitting antennas (8) are configured to emit their electromagnetic waves (10) with the same frequency and phase-synchronously with one another.

2. Belt drive (2) according to claim 1,
wherein the transmitting antennas (8) are formed by a multiple transmitting antenna (3).

3. Belt drive (2) according to claim 1 or 2,
further comprising a power splitter (7), which is configured to receive an output signal and to forward the received output signal to the transmitting antennas (8) with the same frequency and phase-synchronously.

4. Belt drive (2) according to claim 3,
wherein the power splitter (7) comprises a Wilkinson splitter (9).

5. Belt drive (2) according to one of the preceding claims, wherein the control and evaluation unit (20) is configured and set up to drive a signal generator (22) and to generate a transmission signal with a fundamental frequency,
wherein a frequency multiplier (24) is set up and configured to generate, from the transmission signal, the output signal as a microwave signal and to feed it to the transmitting antennas (8), preferably to the multiple transmitting antenna (3).

6. Belt drive (2) according to claim 5,
wherein an RF amplifier (28) is configured and set up to receive the output signal of the frequency multiplier (24), to amplify it and to feed it to the transmitting antennas (8), preferably to the multiple transmitting antenna (3).

7. Belt drive (2) according to one of the preceding claims, wherein in each case one input amplifier (30) per receiving antenna (16) is configured and set up to receive the respective reflected electromagnetic wave (18) from the respective receiving antenna (16), to amplify it and to feed it to the control and evaluation unit (20).

8. Belt drive (2) according to one of the preceding claims, wherein in each case one mixer (26) per receiving antenna (16) is configured and set up to receive the output signal of the transmitting antennas (8) and the reflected electromagnetic wave (18) of the respective receiving antenna (16),
wherein the mixer (26) is further configured and set up to multiply the input signal of the respective reflected electromagnetic wave (18) by the output signal of the transmitting antennas (8).

9. Belt drive (2) according to claim 8,
wherein in each case one low-pass filter (32) is configured and set up to low-pass filter the output signal of the respective mixer (26).

10. Belt drive (2) according to claim 9,
wherein in each case one low-frequency amplifier (34) is configured and set up to amplify the output signal of the respective low-pass filter (32) at low frequency.

## Revendications

1. Entraînement par courroie (2), de préférence installation de bande transporteuse (2), avec une courroie (2), laquelle est fermée sans fin autour d'une poulie de courroie motrice (4a) et autour d'une poulie de courroie entraînée (4b), avec une pluralité d'antennes d'émission (8) parallèles, lesquelles sont respectivement réalisées et agencées pour émettre une onde électromagnétique (10) sous un angle vers la courroie (2),
avec une antenne de réception (16) par antenne d'émission (8), laquelle est réalisée et agencée pour détecter l'onde (18) respectivement réfléchie, et avec une unité de commande et d'évaluation (20), laquelle est réalisée et conçue pour déterminer, à partir de l'onde électromagnétique (10) respectivement émise et de l'onde réfléchie (18) respectivement correspondante détectée, le comportement de réflexion-transmission de la courroie (2) à cet endroit,
**caractérisé en ce que**
les antennes d'émission (8) sont réalisées pour émettre leurs ondes électromagnétiques (10) avec la même fréquence et de manière synchrone en phase les unes par rapport aux autres.

2. Entraînement par courroie (2) selon la revendication 1,
dans lequel les antennes d'émission (8) sont formées par une antenne d'émission multiple (3).

3. Entraînement par courroie (2) selon la revendication 1 ou 2,
comprenant en outre un diviseur de puissance (7), lequel est réalisé pour recevoir un signal de sortie et pour transmettre le signal de sortie reçu aux antennes d'émission (8) avec la même fréquence et de manière synchrone en phase.

4. Entraînement par courroie (2) selon la revendication 3,
dans lequel le diviseur de puissance (7) comporte un diviseur de Wilkinson (9).

5. Entraînement par courroie (2) selon l'une des revendications précédentes, dans lequel l'unité de commande et d'évaluation (20) est réalisée et conçue pour commander un générateur de signal (22) et pour générer un signal d'émission avec une fréquence fondamentale,
dans lequel un multiplicateur de fréquence (24) est conçu et réalisé pour générer, à partir du signal d'émission, le signal de sortie sous forme de signal micro-ondes et pour l'acheminer aux antennes d'émission (8), de préférence à l'antenne d'émission multiple (3).

6. Entraînement par courroie (2) selon la revendication 5,
dans lequel un amplificateur HF (28) est réalisé et conçu pour recevoir le signal de sortie du multiplicateur de fréquence (24), pour l'amplifier et pour l'acheminer aux antennes d'émission (8), de préférence à l'antenne d'émission multiple (3).

7. Entraînement par courroie (2) selon l'une des revendications précédentes,
dans lequel respectivement un amplificateur d'entrée (30) par antenne de réception (16) est réalisé et conçu pour recevoir l'onde électromagnétique (18) respective réfléchie de l'antenne de réception (16) respective, pour l'amplifier et pour l'acheminer à l'unité de commande et d'évaluation (20).

8. Entraînement par courroie (2) selon l'une des revendications précédentes,
dans lequel respectivement un mélangeur (26) par antenne de réception (16) est réalisé et conçu pour recevoir le signal de sortie des antennes d'émission (8) et l'onde électromagnétique réfléchie (18) de l'antenne de réception (16) respective,
dans lequel le mélangeur (26) est en outre réalisé et conçu pour multiplier le signal d'entrée de l'onde électromagnétique réfléchie (18) respective par le signal de sortie des antennes d'émission (8).

9. Entraînement par courroie (2) selon la revendication 8,
dans lequel respectivement un filtre passe-bas (32) est réalisé et conçu pour filtrer passe-bas le signal de sortie du mélangeur (26) respectif.

10. Entraînement par courroie (2) selon la revendication 9,
dans lequel respectivement un amplificateur basse fréquence (34) est réalisé et conçu pour amplifier à basse fréquence le signal de sortie du filtre passe-bas (32) respectif.
